# EUROPEAN PATENT SPECIFICATION

(11) **EP 2 322 025 B1**
(45) Date of publication and mention of the grant of the patent: **25.12.2013**
(21) Application number: 10014544.0
(22) Date of filing: 12.11.2010
(51) Int. Cl.: A01C 3/00, A01C 3/02

(54) **A plant and a method for acidifying animal manure**
Vorrichtung und Verfahren zur Säuerung von Tierdung
Appareil et procédé pour acidifier un engrais animal

(30) Priority: 13.11.2009 DK 200901214
(43) Date of publication of application: 18.05.2011
(73) Proprietor: Jørgen Hyldgaard Staldservice A/S, 7500 Holstebro (DK)
(72) Inventor: Hyldgaard, Ken, 7500 Holstebro (DK)
(74) Representative: Olesen, Kaj

(56) References cited:
- EP-A1- 0 850 561
- EP-A1- 1 330 154
- EP-A2- 0 286 616
- EP-A2- 2 179 978
- DE-C1- 3 835 468
- NL-A- 9 201 358
- US-A- 5 890 454
- US-A1- 2007 227 985

## Description

### Field of the Invention

The present invention relates to a method for acidifying animal manure according to the preamble of claim 1.

### Background of the Invention

In traditional livestock holdings, it is a known problem that animal manure - typically in the form of liquid manure - from livestock, such as cows and pigs, smells. It is also recognized that some of these obnoxious smells stem from ammonia emission from livestock manure.

Furthermore, ammonia emission has the drawback that the fertilizing effect of the livestock manure is reduced, and thus it is desirable that the ammonia emission from livestock manure is reduced to both reduce obnoxious smells in and from the livestock stable, from process and storage tanks and/or from the livestock manure while this is spread and when it has been spread on an area as well as to increase the fertilizing effect of the livestock manure.

Thus, it is known from Danish patent EP 1330154, which discloses a method in accordance with the preamble of claim 1, to oxidize and acidify liquid manure in order to reduce the ammonia emission from the liquid manure. But the plant described is both complex and expensive and not very efficient.

Consequently, it is an object of the invention to provide an advantageous technique for acidifying animal manure.

### The invention

In a preferred embodiment, the invention relates to a method in accordance with claim 1 performed by means of a plant for acidification of animal manure. The plant comprises a process tank provided with a mixing unit for mixing an acidification agent with a quantity of animal manure in said process tank, said process tank furthermore being provided with supply means for supply of the acidification agent to the animal manure in the process tank. Moreover, the plant comprises conveying means for conveying a quantity of animal manure from a livestock stable and to the process tank, and return means for returning at least a portion of the acidified animal manure from the process tank to a livestock stable. The plant is characterized in that said supply means are arranged at an upper part of the process tank so that the acidification agent can be supplied to the animal manure in the process tank at an upper part of the animal manure.

Known acidification agents that are suitable for acidification of animal manure, such as various acids, have a density higher than that of animal manure. On addition of the acidification agent at an upper part of the animal manure, an optimal mixing of the acidification agent is consequently ensured since due to its higher density, the acidification agent will sink down through the animal manure and thus be distributed more evenly.

Furthermore, addition of the acidification agent from the top of the animal manure reduces the risk of accumulation of quantities of acids close to the walls or bottom of the process tank which might corrode and thus damage the process tank. If the acidification agent as described in EP 1330154 is added at the bottom of the process tank, there is an increased risk that some of the acidification agent will remain at the bottom, and consequently, it will not be used to acidify the animal manure thus lowering the efficiency of the system and thereby increasing the corrosion of the process tank, which will reduce the life of the plant.

It should be noted that in this connection the term "animal manure" should be taken to mean any form of urine and/or faeces, either separately or mixed to liquid manure, and in this connection the term "livestock" primarily covers cows and pigs, but it is also conceivable to use the plant for acidifying animal manure from goats, sheep, horses, mink, chickens or other farm animals.

It should be noted that in this connection the term "acidification" means that the pH level of the animal manure is lowered, i.e. that the animal manure is acidified. In this case, the animal manure is acidified from its normal pH level (typically above 7) to a pH level of between 5 and 6. The acidification agent itself will typically be an acid, such as sulphuric acid, nitric acid, formic acid, phosphoric acid or the like or another acidic agent suitable for lowering the pH level of the animal manure.

The term "at an upper part of the process tank" should be taken to mean the upper part of the active part of the process tank. This means that if the process tank is only filled up to the halfway mark with animal manure during normal operation of the acidification plant, the term "at an upper part of the process tank" should be taken to mean the upper part of the part of the process tank in contact with the animal manure and not necessarily the upper part of the entire process tank.

It should also be pointed out that the term "at an upper part of the animal manure" should be taken to mean the part of the animal manure facing upwards, and in particular the upper half of the quantity of animal manure in the process tank.

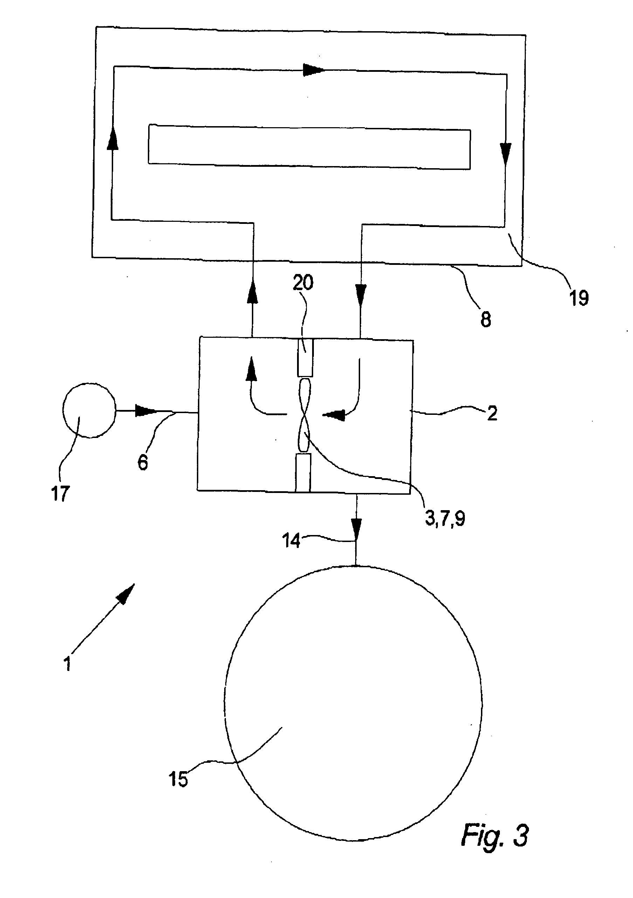

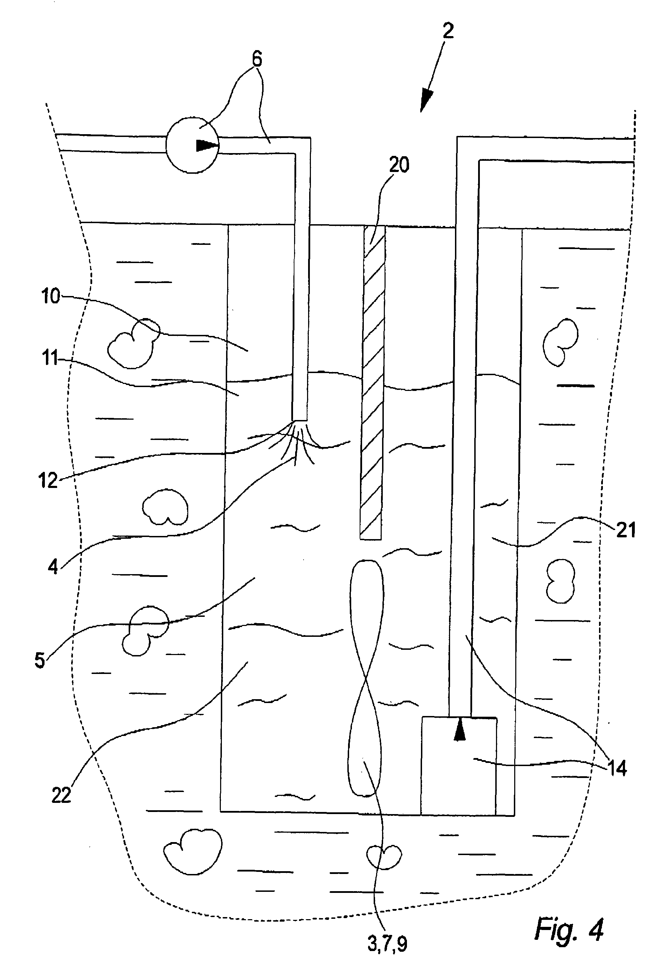

Furthermore, it should be noted that even though the mixing unit, the conveying means and the return means are mentioned as three separate units, this does not mean that they cannot be one and the same unit, such as an agitator (the mixing unit) arranged in such a way that the agitating movement both conveys (the conveying means) the animal manure from a stable and at the same time returns (the return means) the animal manure to a stable. See e.g. Figs. 3 and 4 and the accompanying description for more details.

One aspect of the invention is that said mixing unit is a propeller agitator.

To ensure an efficient acidification of all of the liquid manure and to ensure that the acidification agent does not accumulate near the walls or bottom of the process thank or near pipes, equipment or the like in the process tank with a resulting increased risk of undesirable corrosion, it is exceedingly important that the acidification agent is mixed with the animal manure quickly and efficiently. For this purpose, a propeller agitator is particularly well-suited as it quickly creates swirls and turbulence in the animal manure ensuring that the acidification agent is evenly distributed in all of the animal manure.

One aspect of the invention is that said acidification agent is sulphuric acid.

Sulphuric acid is relatively cheap and suitable for acidifying animal manure. As sulphuric acid at the same time has a density of 1.8 g/cm³ making it heavier than animal manure, it is particularly suitable as acidification agent in connection with an acidification plant wherein the acidification agent is added to the top of the animal manure.

One aspect of the invention is that said supply means are arranged such that an outlet opening of said supply means is below an upper surface of said animal manure when the acidification agent is supplied to said animal manure in said process tank.

Many known forms of acidification agents suitable for acidifying animal manure are characterized in that they react with air, moisture, water or the like and thus emit gasses that are either harmful or at least annoying. By ensuring that the outlet opening on the supply means (typically a pipe) supplying the acidification agent to the animal manure in the process tank is below the level of the animal manure in the process tank when the acidification agent is supplied, the risk of the acidification agent reacting with the surrounding air is reduced at the same time as it is ensured that the acidification agent is supplied "inside" the animal manure, in order that the chemical reaction occurring in the mixture happens "inside" the animal manure and not on the surface thereof which could lead to undesired emission of gasses.

It should be noted that in this connection the term "outlet opening" should be taken to mean an opening of said supply means through which the acidification agent is supplied to the animal manure in the process tank.

One aspect of the invention is that said plant further comprises drainage means for draining at least a portion of the acidified animal manure from said process tank and on to a storage tank.

The conveyance of acidified animal manure to the storage tank ensures that the ammonia emission from the storage tank is reduced and that the fertilizing effect of the animal manure is increased.

One aspect of the invention is that said supply means are arranged such that said acidification agent can be supplied to the animal manure in said process tank at an upper part of said animal manure via an upper surface of said animal manure in said process tank.

As mentioned above, the acidification agent suitable for acidifying animal manure has a larger density than the animal manure itself. The supply of the acidification agent via an upper surface of the animal manure reduces the risk that the acidification agent is not distributed evenly in all of the animal manure as the heavier acidification agent - due to gravity -will be "pulled" down through the animal manure as a consequence, so that even if the mixing unit is not completely efficient, the acidification agent will be evenly distributed in the animal manure.

The invention relates to a method for acidifying animal manure. The method comprises the following steps:
- conveying the animal manure from one livestock stable to a process tank,
- admixing an acidification agent into the animal manure in the process tank, and
- returning at least a portion of the acidified animal manure to a livestock stable.

The method is characterized in that the acidification agent is added to an upper part of the animal manure at an upper part of the process tank.

Addition of the acidification agent to an upper part of the animal manure reduces the risk of the acidification agent not being properly mixed with the animal manure. Consequently, the efficiency of the method is increased and the risk of the acidification agent damaging the process tank is reduced.

One aspect of the invention is that said acidification agent is admixed into said animal manure in said process tank during agitation.

As mentioned above, there is a risk that the process tank or related equipment is damaged if the tank comes into contact with a too high concentration of the acidification agent. Thus, it is advantageous to agitate the animal manure during supply of the acidification agent to ensure that the acidification agent is quickly and evenly distributed in the animal manure.

One aspect of the invention is that said acidification agent is supplied to said animal manure through an outlet opening in one or more supply means in said process tank, and that said acidification agent is only added to said animal manure when the level of said animal manure is higher than said outlet opening.

Thus, an advantageous embodiment of the invention is obtained.

One aspect of the invention is that the acidified animal manure returned to said livestock stable has an oxygen content of between 0 mg/l and 0.3 mg/l, preferably between 0 mg/l and 0.2 mg/l.

If during the agitation air is admixed into the animal manure or if air or pure oxygen is added to the animal manure in another way before the animal manure is returned to the stable, the risk of increasing the obnoxious smells from the animal manure is increased both while it is located in the process tank and while it is stored in the stable or the storage tank. A high content of oxygen or air increases the risk of it "bubbling" up through the animal manure and being released to the surrounding air with a resulting increase in obnoxious smells.

Furthermore, the oxygen will react with the acid added and thus reduce the effect thereof in such a way that either more acid has to be added to achieve the desired effect or the animal manure has to be acidified more often since the ammonia content in the animal manure is restored faster.

Furthermore, experiments have shown that the lower the oxygen content of the animal manure, the easier the distribution of acid in the animal manure. In other words, when no air or oxygen is added to the animal manure during the acidification process, the animal manure does not need to be agitated as much, and consequently energy and time is saved.

### Figures

The invention will be explained further herein below with reference to the figures in which:
- Fig. 1: shows a top view of an example of an acidification plant for e.g. a pig farm,
- Fig. 2: shows a cross-sectional side view of the process tank shown in Figure 1,
- Fig. 3: shows a top view of an example of an acidification plant for e.g. a cattle farm, and
- Fig. 4: shows a cross-sectional side view of the process tank shown in Figure 3.

### Detailed description

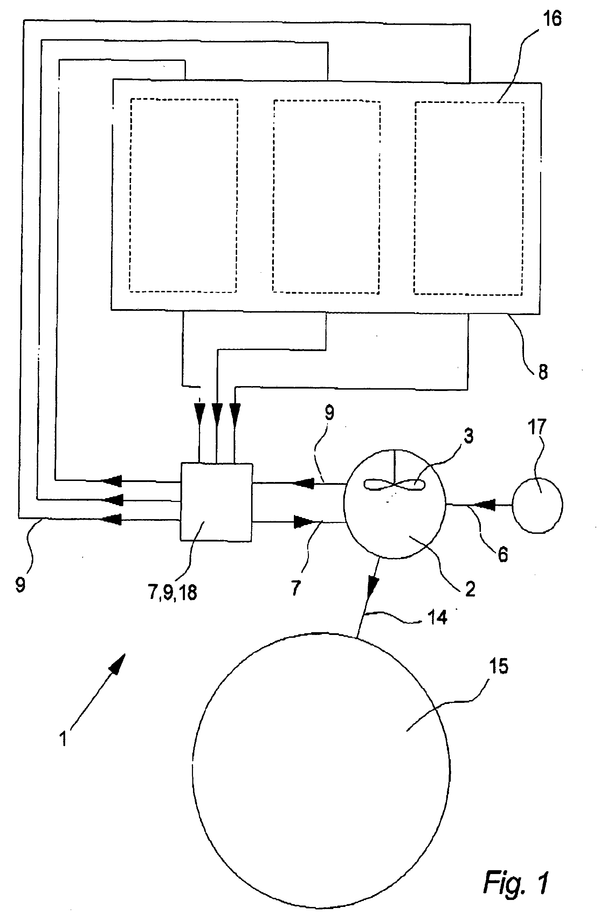

Figure 1 shows a top view of an example of an acidification plant 1 for e.g. a pig farm.

In the example shown, the livestock stable 8 is divided into three independent stable sections 16, but in another embodiment of the invention the stable 8 might consist of one, two, four or more individual stable sections 16, or the acidification plant 1 might be connected to more than one livestock stable 8, such as two, three or more individual stables 8 each comprising one or more individual stable sections 16.

In the example shown, the animal manure is conveyed from one stable section 16 in the stable 8 to the process tank 2 by conveying means 7 in the form of pipes from the stable 8 to a technical reservoir 18, a pump (not shown) positioned in the technical reservoir 18 and pipes from the technical reservoir and to the process tank 2. When a desired level of animal manure has been conveyed to the process tank 2, the conveyance is stopped by stopping the pump and/or by redirecting one or more valves. Then, the acidification agent is added to the animal manure in the process tank 2 during agitation by the mixing unit 3.

The quantity of acidification agent added to the animal manure can be determined based on a pH measurement of the animal manure in the process tank 2 or a preceding measurement of the pH value for the animal manure in the stable 8/stable section 16 from which said quantity of animal manure is obtained. Alternatively, a fixed quantity of acidification agent could be added to a fixed quantity of animal manure, or the quantity of acidification agent can be determined in another way.

The quantity of animal manure conveyed from the stable 8 and into the process tank 2 may be determined by one or more level sensors in the process tank 2 or in the stable 8 or in another way.

After the acidification of the animal manure in the process tank 2 by lowering the pH value of the animal manure, at least a portion of the acidified animal manure in the process tank 2 is returned to the stable 8 by return means 9 in the form of pipes from the process tank 2 to a technical reservoir 18, a pump (not shown) positioned in the technical reservoir 18 and pipes from the technical reservoir 18 and back to the stable 8. The acidified quantity of animal manure will typically be returned to the same stable 8 and/or stable section 16 from which it came, but it is also conceivable that the acidified quantity can be returned to one or more other stables 8 and/or to one or more other stable sections 16 in the same stable 8.

From the process tank 2, it is also possible that at least a portion of the acidified animal manure is conveyed to a storage tank 15, either directly from the process tank 2 as shown in Figure 1 or via the technical reservoir 18 from which a branch pipe can convey at least a portion of the acidified animal manure to the storage tank 15.

In the example shown, the conveying means 7 comprise a pump positioned in a dedicated technical reservoir 18, but in another embodiment of the invention the pump could be positioned in the process tank 2, in the stable 8 or somewhere else, or the conveying means 7 could simply be the pipes themselves conveying the animal manure from the stable 8 and to the process tank 2 wherein said pipes were arranged with a downward gradient so that gravity would drive the animal manure to the process tank 2.

Similarly, the return means 9 in the example shown also comprise a pump positioned in a dedicated technical reservoir 18, but in another embodiment of the invention said return pump could be positioned in the process tank 2, in the stable 8 or somewhere else, or the return means 9 could simply be the pipes themselves returning the animal manure from the stable 8 and to the process tank 2 wherein said pipes were arranged with a downward gradient so that gravity would drive the animal manure from the process tank 2 back to the stable 8.

As mentioned above, in the example shown the plant 1 comprises both a pump for conveying the animal manure to the process tank 2 and a pump for returning the animal manure to the stable 8, but in another embodiment of the invention, the same pump could perform both tasks and said pump could also be a part of the drainage means 14 if the pump was also used for pumping acidified animal manure to the storage tank 15. If the pump has several purposes, the technical reservoir 18 will probably also comprise one or more valves to direct the animal manure in the desired direction.

In the example shown, the technical reservoir 18 is shaped as a well buried in the ground outside the stable 8 in which pump, valves and any other equipment are placed at the bottom of said well, but in another embodiment of the invention, the technical reservoir 18 could have the shape of a separate casing above the ground, or the technical reservoir 18 could be an integrated part of the stable 8 or the process tank 2. Alternatively, the technical reservoir 18 could also be divided into one or more separate technical reservoirs 18 with e.g. valves arranged in a reservoir 18 and the pump or pumps arranged in another reservoir 18.

In the example shown, the acidification plant 1 furthermore comprises an acidification agent reservoir 17 in the shape of a closed tank in which the acidification agent can be stored until it is to be added to the animal manure in the process tank 2. In this case, the acidification agent reservoir 17 is connected to the process tank 2 by supply means 6 which in this case comprise pipes and a pump capable of pumping the acidification agent from the acidification agent reservoir 17 and into the animal manure in the process tank 2. In another embodiment of the invention, the acidification agent could also be conveyed from the acidification agent reservoir 17 and into the process tank solely by means of gravity by positioning the acidification agent reservoir 17 above the process tank 2.

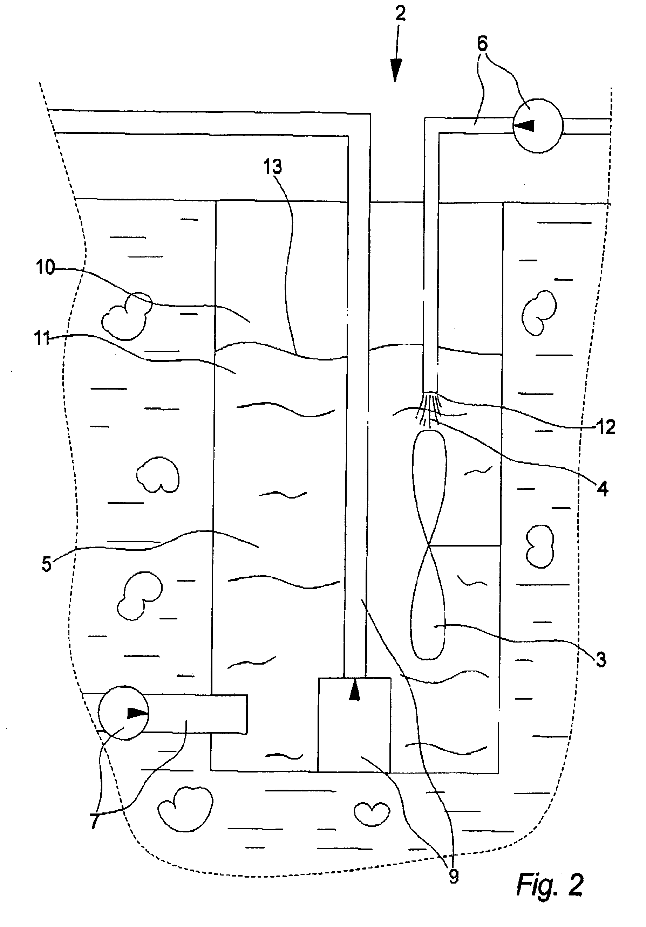

Figure 2 shows a cross-sectional side view of the process tank 2 shown in Figure 1.

In the example shown, the animal manure 5 is conveyed to a sub-surface process tank 2 via conveying means 7 conveying the animal manure 5 into the bottom of the process tank 2. The conveying means 7 convey the animal manure into the process tank 2 until a given level has been reached. This level could be conditioned by the fact that the animal manure 5 must be at a higher level in the process tank 2 than the outlet opening 12 of the supply means 6 supplying the acidification agent 4 to the process tank 2. Thus, it is ensured that the outlet opening 12 is completely encased by the animal manure 5 when the acidification agent 4 is added such that the risk of the acidification agent 4 reacting with air before it has been admixed with the animal manure 5 is eliminated or at least reduced, and such that the reaction occurring when the acidification agent 4 is mixed with the animal manure 5 occurs in the animal manure 5 and not on top of it thus avoiding emission of obnoxious gasses and increasing the efficiency of the plant 1.

In this embodiment of the invention, the supply means 6 comprise a pipe conveying the acidification agent 4 arranged at an upper part 10 of the process tank 2 - i.e. in the upper half of the process tank 2 - so that the acidification agent 4 can be supplied at an upper part 11 of the animal manure 5, which means in each case at the upper half of the quantity of animal manure 5 in the process tank 2, or more preferably at the upper quarter of the quantity of animal manure 5 in the process tank 2.

In this embodiment of the invention, the process tank 2 is provided with a mixing unit 3 in the form of a propeller agitator driven by an electric motor; but in another embodiment of the invention, the propeller agitator could be driven by another means or the mixing unit 3 could be constructed as a whisk, mixing paddles, nozzles creating high velocity circulation in the animal manure, a unit for shaking or rotating the entire process tank 2 or it could be any other unit suitable for ensuring that the acidification agent 4 is quickly and efficiently distributed in a tolerably even way in the animal manure 5.

In this embodiment of the invention, the mixing unit 3 is positioned in the lower part of the process tank 2 in such a way that the mixing unit 3 is completely encased by the animal manure 5 when the tank 2 is filled to the level at which the acidification agent 4 can be supplied; consequently the entire mixing unit 3 is positioned below the level of the outlet opening 12 of said supply means 6 in such a way that if the process tank 2 is filled to such a high level that the outlet opening 12 is completely encased by the animal manure 5, the entire mixing unit 3 is also entirely encased by the animal manure 5. Consequently, the risk of admixing air into the animal manure 5 during the mixing process is reduced which is advantageous as the risk of the animal manure 5 frothing is reduced and the risk of re-released air bubbles creating obnoxious smells is reduced.

In this embodiment of the invention, the outlet opening 12 of the supply means 6 is arranged substantially directly above the mixing unit 3 to ensure that the supplied acidification agent 4 is quickly mixed with all of the animal manure 5 in the process tank 2; but in another embodiment of the invention, the supply means 6 could be arranged somewhere else, or the supply means 6 could comprise more outlet pipes or at least more outlet openings 12 for supplying the acidification agent 4 in several locations in the process tank 2 at the same time. This could be advantageous as a quicker mixing of the acidification agent 4 in the animal manure 5 could be ensured if, from the beginning, the acidification agent 4 is distributed in a larger part of the upper part 11 of the animal manure 5.

The supply means 6 could also be arranged as one or more pipes wherein the diameters of the pipes were substantially increased at the outlet opening 12 to ensure that as much acidification agent 4 as possible, as quickly as possible, comes into contact with as large a quantity of animal manure 5 as possible in order to ensure quick and efficient mixing.

When the acidification agent 4 has been thoroughly mixed with the animal manure 5, the acidified animal manure 5 can be returned to a livestock stable 8 by the return means 9 which in this case is a submerged pump placed at the bottom of the process tank 2. Via pipes connected to the submerged pump, at least a portion of the acidified animal manure 5 is pumped up of the process tank 2 and into a stable 8. The submerged pump could possibly also be used to convey a portion of the animal manure 5 into a storage tank, or the process tank 2 could be provided with a separate pump for this purpose.

The acidified animal manure could also be returned to the stable 8 by reversing the pumping direction of the conveying means 7 or by doing something completely different.

Figure 3 shows a top view of an example of an acidification plant 1 for e.g. a cattle farm.

Cattle farms in particular - but also other livestock farms - are characterized in that the stables 8 or stable sections comprise an annular duct 19 in which the animal manure 5 can circulate.

In this embodiment of the invention, this annular duct 19 is in principle elongated in such a way that it extends outside the stable 8 and thus forms a process tank 2 outside the stable 8.

In this embodiment of the invention, the circulation of the annular duct 19 is created by the mixing unit 3 in the process tank 2. In other words, this means that the mixing unit 3 in the process tank 2 also serves as conveying means 7, as the mixing unit 3 creates a flow in the animal manure 5 making the animal manure 5 flow from the stable 8 into the process tank 2. Thus, the mixing unit 3 in the process tank 2 also serves as the return means 7 in this case, as the flow created by the mixing unit 3 will also make the animal manure 5 flow from the process tank 2 and into the stable 8 again.

For this very reason, the process tank 2 is in this case provided with one or more partition walls 2 ensuring that substantially all of the animal manure 5 passing through the process tank 2 is properly agitated. Both to ensure that solid parts of the animal manure 5 is somewhat evenly distributed in all of the animal manure 5 and especially to ensure that there is so much turbulence and flow in the animal manure 5 that when the acidification agent is added to the animal manure 5, it is quickly and efficiently distributed in substantially all of the animal manure 5 leaving the process tank 2.

In this embodiment of the invention, it is also possible to convey at least a portion of the animal manure from the process tank 2 and into a storage tank 15 such that the quantity of animal manure 5 circulating in the annular duct 19 remains within a fixed minimum and maximum quantity.

Similarly, the process tank 2 is provided with supply means 6 for supplying the acidification agent to the animal manure 5 in the process tank 2 before the acidified animal manure 5 circulates back to the stable 8.

Figure 4 shows a cross-sectional side view of the process tank 2 shown in Figure 3.

In this embodiment of the invention, the mixing unit 3 is positioned under a partition wall 20 in the process tank 2 so that substantially all of the animal manure 5 has to pass the mixing unit 3 in order to circulate in the annular duct.

In this embodiment of the invention, the process tank 2 is provided with drainage means 14 in the form of a submerged pump for conveying a part of the animal manure 5 from the process tank 2 to a storage tank, but in another embodiment, the pump could also be a long-shaft pump or another type of pump suitable for pumping animal manure 5.

In this case, the pump 14 is placed in the flow chamber 21 in the process tank 2, but in another embodiment of the invention, the drainage means 14 could be placed in the return chamber 22 on the other side of the partition wall 20 in the process tank 2, or the drainage means 14 could be placed in an additional separate chamber in the process tank 2 in fluid connection with the flow chamber 21 and/or the return chamber 22.

In this embodiment of the invention, the supply means 6 are arranged in the return chamber 22 immediately downstream of the mixing unit 3 in such a way that it is ensured that the supplied acidification agent 4 is quickly and efficiently mixed with the animal manure 5; but in another embodiment of the invention, the supply means 6 could be placed in the flow chamber 21 or the supply means 6 could be placed between the chambers 21, 22 at or especially above the mixing unit 3, or the supply means 6 could be arranged somewhere else in the process tank 2 or in several of the above-mentioned places at the same time to ensure quick and efficient mixing.

In the foregoing, the invention is described in relation to specific embodiments of acidification plants 1, process tanks 2, stables 8 etc. as shown in the drawings, but it is readily understood by a person skilled in the art that the invention can be varied in numerous ways within the scope of the appended claims.

### List

- 1.: Plant for acidifying animal manure
- 2.: Process tank
- 3.: Mixing unit
- 4.: Acidification agent
- 5.: Animal manure
- 6.: Supply means
- 7.: Conveying means
- 8.: Livestock stable
- 9.: Return means
- 10.: Upper part of process tank
- 11.: Upper part of animal manure
- 12.: Outlet opening
- 13.: Upper surface of animal manure
- 14.: Drainage means
- 15.: Storage tank
- 16.: Stable section
- 17.: Acidification agent reservoir
- 18.: Technical reservoir
- 19.: Annular duct
- 20.: Partition wall
- 21.: Flow chamber
- 22.: Return chamber

## Claims

1. A method for acidifying animal manure (5), wherein said method comprises the following steps:
• conveying animal manure (5) from a livestock stable (8) to a process tank (2),
• admixing an acidification agent (4) into said animal manure (5) in said process tank (2), and
• returning at least a portion of the acidified animal manure (5) to a livestock
stable (8),
**characterized in**
**that** said acidification agent (4) is added to an upper part (11) of said animal manure (5) at an upper part (10) of said process tank (2) and wherein said acidification agent (4) is added to said animal manure (5) through an outlet opening (12) in one or more supply means (6) in said process tank (2), and wherein said acidification agent (4) is only added to said animal manure (5) when the level of said animal manure (5) is higher than said outlet opening (12).

2. A method according to claim 1, wherein said acidification agent (4) is admixed into said animal manure (5) in said process tank (2) during agitation.

3. A method according to claim 1 or 2, wherein the acidified animal manure (5) which is returned to said livestock stable (8) has an oxygen content of between 0 mg/l and 0.3 mg/l, preferably between 0 mg/l and 0.2 mg/l.

4. A method according to any of the preceding claims wherein said method is performed by means of a plant (1) comprising
a process tank (2) provided with a mixing unit (3) for mixing an acidification agent (4) with a quantity of animal manure (5) in said process tank (2), and wherein said process tank (2) furthermore is provided with supply means (6) for supply of said acidification agent (4) to said animal manure (5) in said process tank (2),
conveying means (7) for conveying a quantity of animal manure (5) from a livestock stable (8) and to said process tank (2), and
return means (9) for returning at least a portion of the acidified animal manure (5) from said process tank (2) to said livestock stable (8),
**characterized in that**
said supply means (6) are arranged at an upper part (10) of said process tank (2) so that said acidification agent (4) can be supplied to said animal manure (5) in said process tank (2) at an upper part (11) of said animal manure (5) and wherein said conveying means (7) is arranged to convey said animal manure (5) into said process tank (2) until the level of said animal manure (5) in said process tank (2) is higher than an outlet opening (12) of said supply means (6).

5. A method according to claim 4, wherein said mixing unit (3) is a propeller agitator.

6. A method according to claim 4 or 5, wherein said acidification agent (4) is sulphuric acid.

7. A method according to any of claims 4-6, wherein said plant (1) furthermore comprises drainage means (14) for draining at least a portion of the acidified animal manure (5) from said process tank (2) and to a storage tank (15).

8. A method according to any of claims 4-7, wherein said supply means (6) are arranged in such a way that said acidification agent (4) can be supplied to said animal manure (5) in said process tank (2) at an upper part (11) of said animal manure (5) via an upper surface of said animal manure (5) in said process tank (2).

## Patentansprüche

1. Verfahren zum Ansäuern von tierischem Stalldung (5), wobei das Verfahren die folgenden Schritte umfasst:
• Befördern von tierischem Stalldung (5) aus einem Viehstall (8) zu einem Verarbeitungsbehälter (2),
• Einmischen eines Ansäuerungsmittels (4) in den tierischen Stalldung (5) in dem Verarbeitungsbehälter (2) und
• Rückführen von mindestens einem Teil des angesäuerten tierischen Stalldungs (5) zu einem Viehstall (8),
**dadurch gekennzeichnet,**
**dass** das Ansäuerungsmittel (4) zu einem oberen Teil (11) des tierischen Stalldungs (5) in einem oberen Abschnitt (10) des Verarbeitungsbehälters (2) hinzugegeben wird und wobei das Ansäuerungsmittel (4) zu dem tierischen Stalldung (5) durch eine Auslassöffnung (12) in einem oder mehreren Zuführmittel(n) (6) in dem Verarbei-tungsbehälter (2) hinzugegeben wird und wobei das Ansäuerungsmittel (4) zu dem tierischen Stalldung (5) nur dann hinzu gegeben wird, wenn das Niveau des tierischen Stalldungs (5) höher als die Auslassöffnung (12) ist.

2. Verfahren nach Anspruch 1, wobei das Ansäuerungsmittel (4) in den tierischen Stalldung (5) in dem Verarbeitungsbehälter (2) während Bewegung eingemischt wird.

3. Verfahren nach Anspruch 1 oder 2, wobei der angesäuerte tierische Stalldung (5), der zu dem Viehstall (8) zurückgeführt wird, einen Sauerstoffgehalt zwischen 0 mg/l und 0,3 mg/l, vorzugsweise zwischen 0 mg/l und 0,2 mg/l aufweist.

4. Verfahren nach einem der vorangegangenen Ansprüche, wobei das Verfahren mittels einer Anlage (1) ausgeführt wird, welche umfasst
einen Verarbeitungsbehälter (2), der mit einer Mischeinheit (3) zum Mischen eines Ansäuerungsmittels (4) mit einer Menge von tierischem Stalldung (5) in dem Verarbeitungsbehälter (2) ausgestattet ist, und wobei der Verarbeitungsbehälter (2) des Weiteren mit Zuführmitteln (6) zum Zuführen des Ansäuerungsmittels (4) zu dem tierischen Stalldung (5) in dem Verarbeitungsbehälter (2) ausgestattet ist,
Fördermittel (7) zum Befördern einer Menge von tierischem Stalldung (5) aus einem Viehstall (8) und zu dem Verarbeitungsbehälter (2) und
Rückführmittel (9) zum Rückführen von mindestens einem Teil des angesäuerten tierischen Stalldungs (5) aus dem Verarbeitungsbehälter (2) zu dem Viehstall (8),
**dadurch gekennzeichnet, dass**
die Zuführmittel (6) in einem oberen Abschnitt (10) des Verarbeitungsbehälters (2) derart angeordnet sind, dass das Ansäuerungsmittel (4) zu dem tierischen Stalldung (5) in dem Verarbeitungsbehälter (2) in einem oberen Teil (11) des tierischen Stalldungs (5) zugeführt werden kann, und wobei das Fördermittel (7) angeordnet ist, um den tierischen Stalldung (5) in den Verarbeitungsbehälter (2) zu befördern, bis das Niveau des tierischen Stalldungs (5) in dem Verarbeitungsbehälter (2) höher als eine Auslassöffnung (12) der Zuführmittel (6) ist.

5. Verfahren nach Anspruch 4, wobei die Mischeinheit (3) ein Schraubenrührer ist.

6. Verfahren nach Anspruch 4 oder 5, wobei das Ansäuerungsmittel (4) Schwefelsäure ist.

7. Verfahren nach einem der Ansprüche 4-6, wobei die Anlage (1) des Weiteren Abführmittel (14) zum Abführen von mindestens einem Teil des angesäuerten tierischen Stalldungs (5) aus dem Verarbeitungsbehälter (2) und zu einem Aufbe-wahrungsbehälter (15) umfasst.

8. Verfahren nach einem der Ansprüche 4-7, wobei die Zuführmittel (6) derart angeordnet sind, dass das Ansäuerungsmittel (4) zu dem tierischen Stalldung (5) in dem Verarbeitungsbehälter (2) in einem oberen Teil (11) des tierischen Stalldungs (5) über eine obere Oberfläche des tierischen Stalldungs (5) in dem Verarbeitungs-behälter (2) zugeführt werden kann.

## Revendications

1. Procédé d'acidification de lisier animal (5), ledit procédé incluant les étapes suivantes :
• convoyage de lisier animal (5) à partir d'une étable (8) vers une cuve de traitement (2),
• déversement d'un agent d'acidification (4) dans ledit lisier animal (5) situé dans ladite cuve de traitement (2), et
• renvoi, vers une étable (8), d'au moins une portion du lisier animal (5) acidifié,
**caractérisé par le fait**
**que** ledit agent d'acidification (4) est ajouté à une partie supérieure (11) dudit lisier animal (5) au niveau d'une partie supérieure (10) de ladite cuve de traitement (2), ledit agent d'acidification (4) étant ajouté audit lisier animal (5) par l'intermédiaire d'un orifice de sortie (12), dans un ou plusieurs moyen(s) d'alimentation (6) placé(s) dans ladite cuve de traitement (2), et ledit agent d'acidification (4) étant ajouté audit lisier animal (5) uniquement lorsque le niveau dudit lisier animal (5) est plus haut que ledit orifice de sortie (12).

2. Procédé selon la revendication 1, dans lequel ledit agent d'acidification (4) est déversé dans ledit lisier animal (5) au cours d'une agitation dans ladite cuve de traitement (2).

3. Procédé selon la revendication 1 ou 2, dans lequel le lisier animal (5) acidifié, renvoyé vers ladite étable (8), présente une teneur en oxygène comprise entre 0 mg/l et 0,3 mg/l, de préférence entre 0 mg/l et 0,2 mg/l.

4. Procédé selon l'une quelconque des revendications précédentes, ledit procédé étant mis en oeuvre au moyen d'une installation (1) comprenant
une cuve de traitement (2) équipée d'une unité de mélange (3) conçue pour mélanger un agent d'acidification (4) à une quantité de lisier animal (5) située dans ladite cuve de traitement (2), ladite cuve de traitement (2) étant pourvue, par ailleurs, de moyens d'alimentation (6) conçus pour délivrer ledit agent d'acidification (4) audit lisier animal (5), dans ladite cuve de traitement (2),
un moyen de convoyage (7) conçu pour convoyer une quantité de lisier animal (5) à partir d'une étable (8) vers ladite cuve de traitement (2), et
un moyen de renvoi (9) conçu pour renvoyer au moins une portion du lisier animal (5) acidifié à partir de ladite cuve de traitement (2) vers ladite étable (8), , ,
**caractérisé par le fait que**
lesdits moyens d'alimentation (6) sont implantés au niveau d'une partie supérieure (10) de ladite cuve de traitement (2), de telle sorte que ledit agent d'acidification (4) puisse être délivré audit lisier animal (5), situé dans ladite cuve de traitement (2), au niveau d'une partie supérieure (11) dudit lisier animal (5), ledit moyen de convoyage (7) étant agencé pour amené ledit lisier animal (5) dans ladite cuve de traitement (2) jusqu'à ce que le niveau dudit lisier animal (5), dans ladite cuve de traitement (2), soit plus haut qu'un orifice de sortie (12) desdits moyens d'alimentation (6).

5. Procédé selon la revendication 4, dans lequel ladite unité de mélange (3) est un agitateur à hélice.

6. Procédé selon la revendication 4 ou 5, dans lequel ledit agent d'acidification (4) est de l'acide sulfurique.

7. Procédé selon l'une quelconque des revendications 4-6, dans lequel ladite installation (1) comprend, par ailleurs, des moyens de vidange (14) conçus pour évacuer au moins une portion du lisier animal (5) acidifié à partir de ladite cuve de traitement (2) vers un réservoir de stockage (15).

8. Procédé selon l'une quelconque des revendications 4-7, dans lequel lesdits moyens d'alimentation (6) sont agencés de façon telle que ledit agent d'acidification (4) puisse être délivré audit lisier animal (5) situé dans ladite cuve de traitement (2), au niveau d'une partie supérieure (11) dudit lisier animal (5), par l'intermédiaire d'une surface supérieure dudit lisier animal (5) situé dans ladite cuve de traitement (2).
